# EUROPEAN PATENT APPLICATION

(11) **EP 3 280 170 A1**
(43) Date of publication of application: **07.02.2018**
(21) Application number: 17180189.7
(22) Date of filing: 07.07.2017
(51) Int. Cl.: H04W 24/08

(54) **DIAGNOSIS APPARATUS AND METHOD FOR FAILURE NODE AND PORTABLE TERMINAL**

(30) Priority: 05.08.2016 CN 201610635932
(71) Applicant: Fujitsu Limited, Kawasaki-shi, Kanagawa 211-8588 (JP)
(72) Inventor: XU, Yi, Chaoyang District, Beijing 100027 (CN); LI, Hongchun, Chaoyang District, Beijing 100027 (CN); TIAN, Jun, Chaoyang District, Beijing 100027 (CN)
(74) Representative: Haseltine Lake LLP

(57) **Abstract**

A diagnosis apparatus and a method for a failure node and a portable terminal. In an implementation, the diagnosis method includes: transceiving packets of a suspected failure node and its neighboring nodes within a period of time are monitored; the monitored packets are parsed, to obtain types, sources and signal strengths of the packets; a status of the suspected failure node is determined according to the obtained types, sources and signal strengths of the packets; and the determined status of the suspected failure node is displayed. Hence, a cause for a node failure is diagnosed without changing an original network and without limiting on hardware and software of a node within the network.

## Description

### Field

This disclosure relates to the field of communication technologies, and in particular to a diagnosis apparatus and a method for a failure node and a portable terminal.

### Background

A wireless sensor network is able to monitor, perceive and collect various information on a perceived object interested by an observer of a node deployment area in a real-time manner, transmit the information in a wireless manner after processing, and finally transmit the information to the observer via a wireless network.

However, it is very possible that changes of the environment and occurrence of obstacles result in instantaneous or permanent loss of connection between nodes. And at the same time, the wireless sensor network usually has no stable energy supplying, and may only take a battery or a solar charging battery carried by itself as its power supply. If power exhaustion of a network node or software and hardware failure occurs, a management end is unable to normally display a result of detection of the sensor, which will result in that the management end is unable to learn a real cause that the network node is unable to normally display, and at the same time, result in that other nodes in the wireless sensor network proceed with transmitting information to the failed network node (referred to as a failure node) without knowing that the network node is unable to operate normally.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

In order to quickly diagnose a cause of failure of a node in case of failure, and give a failure diagnosis result within a period of time, embodiments of this disclosure provide a diagnosis apparatus and a method for a failure node and a portable terminal.

According to a first aspect of the embodiments of this disclosure, there is provided a diagnosis apparatus for a failure node, including:
a monitoring module configured to monitor transceiving packets of a suspected failure node and its neighboring nodes within a period of time;
a parsing module configured to parse the packets monitored by the monitoring module, to obtain types, sources and signal strengths of the packets;
a processing module configured to determine a status of the suspected failure node according to the types, sources and signal strengths of the packets obtained by the parsing module; and
a displaying module configured to display the status of the suspected failure node determined by the processing module.

According to a second aspect of the embodiments of this disclosure, there is provided a portable terminal, including the apparatus as described in the first aspect.

According to a third aspect of the embodiments of this disclosure, there is provided a diagnosis method for a failure node, including:
monitoring transceiving packets of a suspected failure node and its neighboring nodes within a period of time;
parsing the monitored packets, to obtain types, sources and signal strengths of the packets;
determining a status of the suspected failure node according to the obtained types, sources and signal strengths of the packets; and
displaying the determined status of the suspected failure node.

An advantage of the embodiments of this disclosure exists in that with the embodiments of this disclosure, a cause of failure of a node in case of failure may be quickly diagnosed, and a failure diagnosis result may be given within a period of time.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/comprising/include/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.

The drawings are included to provide further understanding of the present disclosure, which constitute a part of the specification and illustrate the preferred embodiments of the present disclosure, and are used for setting forth the principles of the present disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is a schematic diagram of a diagnosis apparatus for a failure node of Embodiment 1;
FIG. 2 is a schematic diagram of a processing module of Embodiment 1;
FIG. 3 is a schematic diagram of an implementation of a second determining module of Embodiment 1;
FIG. 4 is a schematic diagram of another implementation of the second determining module of Embodiment 1;
FIG. 5 is a schematic diagram of a further implementation of the second determining module of Embodiment 1;
FIG. 6 is a schematic diagram of processing flow of the diagnosis apparatus for a failure node of Embodiment 1;
FIG. 7 is a schematic diagram of a portable terminal of Embodiment 2;
FIG. 8 is a schematic diagram of a hardware structure of the portable terminal of Embodiment 2;
FIG. 9 is a schematic diagram of a diagnosis method for a failure node of Embodiment 3; and
FIG. 10 is a schematic diagram of determining a status of a suspected failure node according to the packets in the method of Embodiment 3.

### Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

In the embodiments of this disclosure, deployment positions of nodes in a network are known, and information uploading situation and network topology on each node may be obtained from a coordinator. And the coordinator may further transmit a control command, such as collecting information on topology of a node, starting sleep, and setting a sleep time, etc., to each node. However, for a deployed wireless sensor network, when a failure occurs in a node, the coordinator is unable to receive information transmitted by the node, unable to communicate with the node via another node, and is hard to judge a cause of network failure by transmitting such existing information as related transmission and reception commands via management software. With the embodiments of this disclosure, a cause for a node failure may be diagnosed without changing an original network and without limiting on hardware and software of a node within the network.

In the embodiments of this disclosure, a diagnosis apparatus and a method for a failure node and a portable terminal shall be described by taking a wireless sensor network as an example. However, the embodiments of this disclosure are not limited thereto, and the apparatus and method and the portable terminal are also applicable to any wireless networks.

In the embodiments of this disclosure, the diagnosis apparatus for a failure node may be configured in a portable terminal, such as portable mobile wireless signal detection equipment. And the portable terminal may be carried by a network manager to near a suspected failure node, so as to diagnose the suspected failure node, determine its current status, and feed back the status to the network manager in a real-time manner.

In the embodiments of this disclosure, the portable terminal configured with the diagnosis apparatus for a failure node may be designed as different equipment forms having functions of the diagnosis apparatus for a failure node. For example, the portable terminal may be a simple and convenient hand-held device. For another example, the portable terminal may be an external device which has input and output ports and may be used in combination with a computer.

Various implementations of the embodiments of this disclosure shall be described below with reference to the accompanying drawings. These implementations are illustrative only, and are not intended to limit this disclosure.

### Embodiment 1

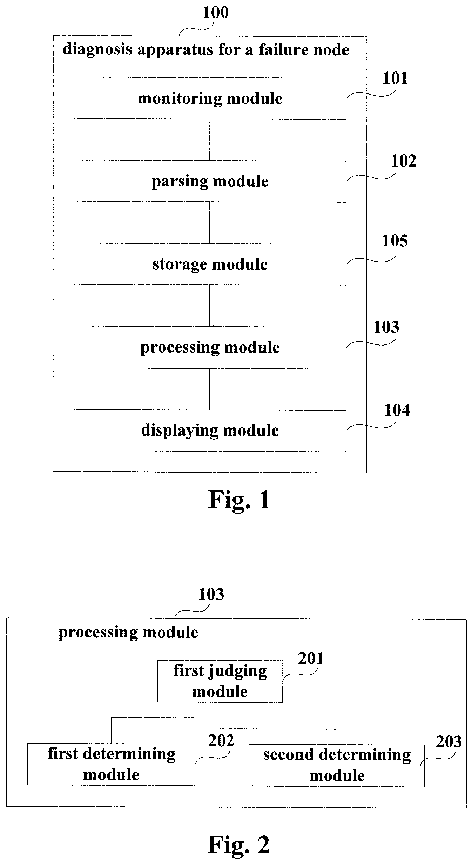

The embodiment of this disclosure provides a diagnosis apparatus for a failure node, which may be configured in a portable terminal. FIG. 1 is a schematic diagram of a structure of the apparatus. Referring to FIG. 1, the apparatus 100 includes a monitoring module 101, a parsing module 102, a processing module 103 and a displaying module 104.

In this embodiment, the monitoring module 101 is configured to monitor transceiving packets of a suspected failure node and its neighboring nodes within a period of time; the parsing module 102 is configured to parse the packets monitored by the monitoring module 101, so as to obtain types, sources and signal strengths of the packets; the processing module 103 is configured to determine a status of the suspected failure node according to the types, sources and signal strengths of the packets obtained by the parsing module 102; and the displaying module 104 is configured to display the status of the suspected failure node determined by the processing module 103.

In this embodiment, when a node in a network is suspected as a failure node (briefly referred to as a suspected failure node), the staff may hold or carry a device configured with the diagnosis apparatus 100 of this embodiment to near the suspected failure node, and the diagnosis apparatus 100 of this embodiment may perform failure diagnosis on the suspected failure node.

In this embodiment, the monitoring module 101 may monitor the transceiving packets of the suspected failure node and its neighboring nodes. For example, the monitoring module 101 may capture packets around the suspected failure node within a period of time, a particular method for capturing packets being not limited in this embodiment.

In this embodiment, the parsing module 102 may parse the packets captured by the monitoring module 101, so as to obtain related information on the packets, such as types, sources, and signal strengths, etc. The "type" here refers to a type of the packet, such as a network join-in request, a response to a network join-in request, data, command, or an acknowledgement (ACK), etc. The "source" here refers to a node transmitting the packet, i.e. a source node of the packet, which is referred to as "a source" in brief. The "signal strength" here refers to a signal strength for receiving the packet, such as received signal strength indication (RSSI). During communication, a node may communicate with other nodes in a network after it joins in the network. Hence, transmission of the network join-in request should be earlier than transmission of data, and transmission of such packets as a response to a network join-in request, a command or an acknowledgement will be performed along with the transmission of the network join-in request or transmission of data. The relevant art may be referred to for an order of transmission of the packets, which shall not be described herein any further.

In this embodiment, the apparatus 100 may further include a storage module 105. As shown in FIG. 1, the storage module 105 may store in a chronological order the types, sources and signal strengths of the packets (data packets) obtained by the parsing module 102.

Table 1 is an example of the packets monitored by the monitoring module 101 within a period of time. As shown in Table 1, all the packets monitored by the monitoring module 101 within this period of time may be stored in a list in a chronological order, each item in the list corresponding to a source ID, a packet type and an RSSI of one packet.

**Table 1**

| Source ID | Packet type | RSSI |
|---|---|---|
| ID1 | Response to a network join-in request | -26 |
| ID2 | data | -73 |
| ... | ... | ... |

In this embodiment, the processing module 103 may process the data in the above table in turn, so as to determine the status of the suspected failure node. And the displaying module 104 may display the status of the suspected failure node according to a processing result of the processing module 103. Hence, the staff may determine the status of the suspected failure node according to the display of the displaying module 104, thereby achieving failure diagnosis of the suspected failure node.

In an implementation, as shown in FIG. 2, the processing module 103 may include a first judging module 201, a first determining module 202 and a second determining module 203. The first judging module 201 is configured to judge whether the suspected failure node transmits a packet, the first determining module 202 is configured to determine that the status of the suspected failure node is a hardware failure or insufficient battery power when it is judged no by the first judging module 201, and the second determining module 203 is configured to determine the status of the suspected failure node according to a type of a packet transmitted by the suspected failure node when it is judged yes by the first judging module 201. In this implementation, when the first determining module 202 determines that the status of the suspected failure node is hardware failure or insufficient battery power, the displaying module 104 may display information on the hardware failure or the insufficient battery power.

In this implementation, whether the suspected failure node transmits a packet may be determined according to the information on the packets monitored by the monitoring module 101 and parsed by the parsing module 102. For example, if an item with "source" being the suspected failure node exists in the above packets, it means that the suspected failure node transmits a packet; otherwise, it is deemed that the suspected failure node does not transmit a packet.

In this implementation, if the suspected failure node does not transmit a packet, it shows that a hardware failure may be existed in the suspected failure node which results in that the packet cannot be transmitted, or it is powered off due to insufficient battery power which results in that the packet cannot be transmitted, in which case the displaying module 104 may display information on the hardware failure or the insufficient battery power, so as to prompt the staff, thereby achieving failure diagnosis.

In this implementation, if the suspected failure node transmits a packet, it shows that the suspected failure node is still able to transmit information to the outside, in which case the status of the suspected failure node may be determined according to the type of the packet transmitted by the suspected failure node.

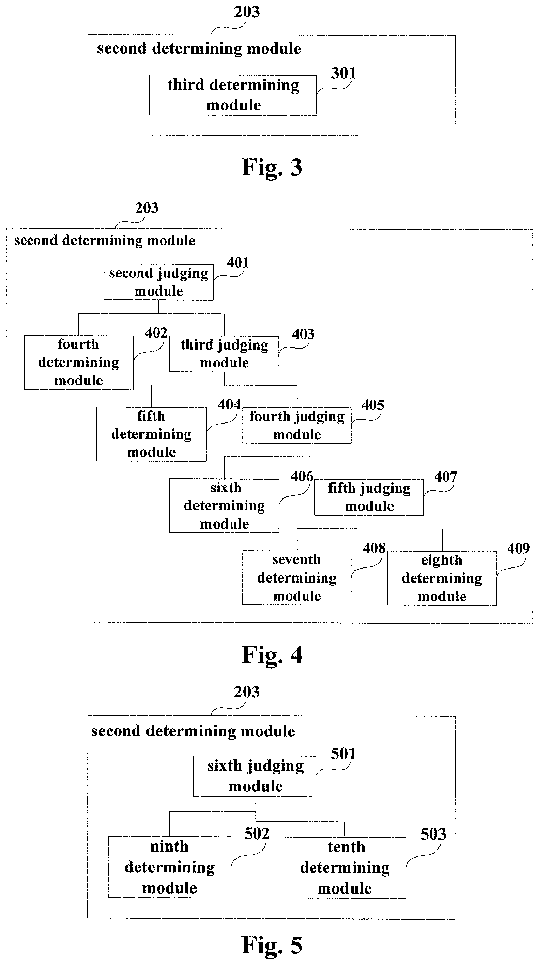

In an implementation, as shown in FIG. 3, the second determining module 203 includes a third determining module 301 which, when the type of the packet transmitted by the suspected failure node is other information than a network join-in request and data (briefly referred to as other information, such as the above command or acknowledgement), determines that the status of the suspected failure node is normal. In this implementation, the displaying module 104 may display information on that the node is normal when the third determining module 301 determines that the status of the suspected failure node is normal.

In this implementation, if the packet transmitted by the suspected failure node is the other information described above, it shows that the suspected failure node may receive and transmit information normally, and the status of the node is normal, in which case the displaying module 104 may display information on that the node is normal, so as to prompt the staff, thereby achieving failure diagnosis.

In an implementation, as shown in FIG. 4, the second determining module 203 includes a second judging module 401 and a fourth determining module 402. The second judging module 401 is configured to, when the type of the packet transmitted by the suspected failure node is a network join-in request, judge whether there exists an intra-network node replying to the network join-in request, and the fourth determining module 402 is configured to determine that the status of the suspected failure node is normal but there exists no network available for joining in when it is judged no by the second judging module, that is, there exists no intra-network node replying to the network join-in request. In this implementation, when the fourth determining module 402 determines that the status of the suspected failure node is normal but there exists no network available for joining in, the displaying module 104 may display information on that the node is normal but there exists no network available for joining in.

In this implementation, if the packet transmitted by the suspected failure node is a network join-in request, it shows that the suspected failure node may receive and transmit information normally, and the status of the node is normal. However, as there exists no intra-network node replying to its network join-in request, it shows that it is possible that there exists no network available for joining in at present, in which case the displaying module 104 may display information on that the node is normal but there exists no network available for joining in, so as to prompt the staff, thereby achieving failure diagnosis.

In this implementation, the second judging module 401 may determine whether there exists an intra-network node replying to the network join-in request according to the types of the packets. For example, if a type of a packet to which an item in the above list corresponds is "a response to a join-in request", but a source to which the item corresponds is not the suspected failure node, it shows that there exists an intra-network node replying to the network join-in request.

In an implementation, as shown in FIG. 4, the second determining module 203 may further include a third judging module 403 and a fifth determining module 404. The third judging module 403 is configured to judge whether the intra-network node replying to the network join-in request allows the suspected failure node to join in the network when it is judged yes by the second judging module 401, that is, there exists an intra-network node replying to the network join-in request, and the fifth determining module 404 is configured to determine that the status of the suspected failure node is normal but there exists no network available for joining in when it is judged no by the third judging module 403, that is, the intra-network node replying to the network join-in request does not allow the suspected failure node to join in the network. In this implementation, when the fifth determining module 404 determines that the status of the suspected failure node is normal but there exists no network available for joining in, the displaying module 104 may display information on that the node is normal but there exists no network available for joining in.

In this implementation, if there exists an intra-network node replying to the network join-in request, whether the intra-network node replying to the network join-in request allows the suspected failure node to join in the network is further judged. A particular manner of judgment is not limited in this embodiment, and may be carried out by existing means, which shall not be described herein any further. If it is not allowed, it shows that the suspected failure node is normal but there exists no network available for joining in, in which case the displaying module 104 may display information on that the node is normal but there exists no network available for joining in, so as to prompt the staff, thereby achieving failure diagnosis.

In this implementation, as shown in FIG. 4, the second determining module 203 may further include a fourth judging module 405 and a sixth determining module 406. The fourth judging module 405 is configured to judge whether the suspected failure node joins in the network when it is judged yes by the third judging module 403, that is, the intra-network node replying to the network join-in request allows the suspected failure node to join in the network, and the sixth determining module 406 is configured to determine that the status of the suspected failure node is normal when it is judged yes by the fourth judging module 405, that is, the suspected failure node joins in the network. In this implementation, when the sixth determining module 406 determines that the status of the suspected failure node is normal, the displaying module 104 may display information on that the node is normal.

In this implementation, if the intra-network node replying to the network join-in request allows the suspected failure node to join in the network, whether the suspected failure node joins in the network is further judged. A particular manner of judgment is not limited in this embodiment, and may be carried out by existing means, which shall not be described herein any further. If the suspected failure node joins in the network, it shows that the status of the suspected failure node is normal, in which case the displaying module 104 may display information on that the node is normal, so as to prompt the staff, thereby achieving failure diagnosis.

In this implementation, as shown in FIG. 4, the second determining module 203 may further include a fifth judging module 407, a seventh determining module 408 and an eighth determining module 409. The fifth judging module 407 is configured to judge whether the suspected failure node proceeds with transmitting a network join-in request when it is judged no by the fourth judging module 405, that is, the suspected failure node does not join in the network; the seventh determining module 408 is configured to determine that the status of the suspected failure node is software abnormal or insufficient receiving sensitivity or insufficient battery power when it is judged yes by the fifth judging module 407, that is, the suspected failure node proceeds with transmitting a network join-in request; and the eighth determining module 409 is configured to determine that the status of the suspected failure node is software abnormal when it is judged no by the fifth judging module 407, that is, the suspected failure node does not proceed with transmitting a network join-in request. In this implementation, when the seventh determining module 408 determines that the status of the suspected failure node is software abnormal or insufficient receiving sensitivity or insufficient battery power, the displaying module 104 may display information on being software abnormal or insufficient receiving sensitivity or insufficient battery power, and when the eighth determining module 409 determines that the status of the suspected failure node is software abnormal, the displaying module 104 may display information on being software abnormal.

In this implementation, if the suspected failure node does not join in the network, whether the suspected failure node proceeds with transmitting a network join-in request is further judged. And if the suspected failure node proceeds with transmitting a network join-in request, it is possible that software abnormality exists in the suspected failure node, or the suspected failure node is insufficient in receiving sensitivity, or the suspected failure node is insufficient in battery power, which results in that the network join-in request is transmitted ceaselessly, in which case the displaying module 104 may display information on being software abnormal or insufficient receiving sensitivity or insufficient battery power, so as to prompt the staff, thereby achieving failure diagnosis. And on the other hand, if the suspected failure node does not join in the network, nor transmit a network join-in request, it shows that there exists no hardware problem in the suspected failure node, and it is possible that not joining in the network is resulted from a software problem, in which case the displaying module 104 may display information on being software abnormal, so as to prompt the staff, thereby achieving failure diagnosis.

In this implementation, the fifth judging module 407 may judge whether the suspected failure node proceeds with transmitting a network join-in request according to the types of the packets. For example, if types of the packets to which multiple items in the above list correspond are "network join-in requests", and sources to which the items correspond are the suspected failure node, it shows that the suspected failure node transmits a network join-in request ceaselessly.

In an implementation, as shown in FIG. 5, the second determining module 203 includes a sixth judging module 501, a ninth determining module 502 and a tenth determining module 503. The sixth judging module 501 is configured to judge whether a coordinator receives a data packet transmitted by the suspected failure node when the type of the packet transmitted by the suspected failure node is data; the ninth determining module 502 is configured to determine that the status of the suspected failure node is link failure when it is judged no by the sixth judging module 501, that is, the coordinator does not receive a data packet transmitted by the suspected failure node; and the tenth determining module 503 is configured to determine that the status of the suspected failure node is normal when it is judged yes by the sixth judging module 501, that is, the coordinator receives a data packet transmitted by the suspected failure node. In this implementation, when the ninth determining module 502 determines that the status of the suspected failure node is link failure, the displaying module 104 may display information on link failure, and when the tenth determining module 503 determines that the status of the suspected failure node is normal, the displaying module 104 may display information on that the node is normal.

In this implementation, if the packet transmitted by the suspected failure node is data, it shows that the suspected failure node may transmit information normally, and the status of the node is normal. However, as the coordinator cannot receive the data packet transmitted by the suspected failure node, it is possible that there exists a failure in a link between the coordinator and the suspected failure node, in which case the displaying module 104 may display information on a link failure, so as to prompt the staff, thereby achieving failure diagnosis. And on the other hand, if the coordinator may receive the data packet transmitted by the suspected failure node, it shows that the suspected failure node and the link between it and the coordinator are both normal, in which case the displaying module 104 may display information on that the node is normal, so as to prompt the staff, thereby achieving failure diagnosis.

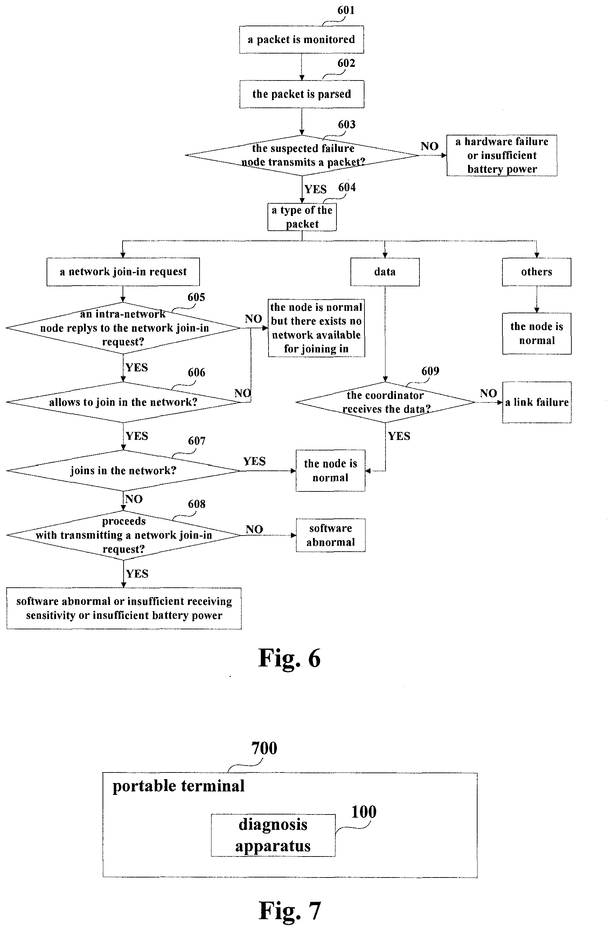

FIG. 6 is a schematic diagram of processing flow of the diagnosis apparatus for a failure node of this embodiment. As shown in FIG. 6, the flow includes:
step 601: a packet is monitored;
step 602: the packet is parsed;
step 603: it is judged whether the suspected failure node transmits a packet, step 604 is executed if it is judged yes, otherwise, it is determined that the status of the suspected failure node is hardware failure or insufficient battery power;
step 604: a type of the packet is determined;
step 605: when the type of the packet is a network join-in request, it is judged whether there exists an intra-network node replying to the network join-in request, step 606 is executed if it is judged yes, otherwise, it is determined that the node is normal but there exists no network available for joining in;
step 606: it is judged whether the intra-network node allows the suspected failure node to join in the network, step 607 is executed if it is judged yes, otherwise, it is determined that the node is normal but there exists no network available for joining in;
step 607: it is judged whether the suspected failure node joins in the network, the node is normal is determined if it is judged yes, otherwise, step 608 is executed;
step 608: it is judged whether the suspected failure node proceeds with transmitting a network join-in request, it is determined that the status of the suspected failure node is software abnormal or insufficient receiving sensitivity or insufficient battery power if it is judged yes, otherwise, it is determined that the status of the suspected failure node is software abnormal; and
step 609: when the type of the packet is data, it is judged whether the coordinator receives the data, it is determined that the node is normal if it is judged yes, otherwise, it is determined that the status of the suspected failure node is link failure.

In this embodiment, when the type of the packet is other information, it is determined that the node is normal.

In this embodiment, step 601 may be carried out by the monitoring module 101, step 602 may be carried out by the parsing module 102, and steps 603-609 may be carried out by the processing module 103. For example, step 603 may be carried out by the first judging module 201, step 605 may be carried out by the second judging module 401, step 606 may be carried out by the third judging module 403, step 607 may be carried out by the fourth judging module 405, step 608 may be carried out by the fifth judging module 407, and step 609 may be carried out by the sixth judging module 501. What described above may be referred to for particular processes, which shall not be described herein any further.

With the diagnosis apparatus of this embodiment, a cause for a node failure is diagnosed and a diagnosis result is given without changing an original network and without limiting on hardware and software of a node within the network.

### Embodiment 2

An embodiment of this disclosure further provides a portable terminal. FIG. 7 is a schematic diagram of the portable terminal. As shown in FIG. 7, the portable terminal 700 includes the diagnosis apparatus 100 described in Embodiment 1. As the diagnosis apparatus 100 has been described in detail in Embodiment 1, its contents are incorporated herein, which shall not be described herein any further.

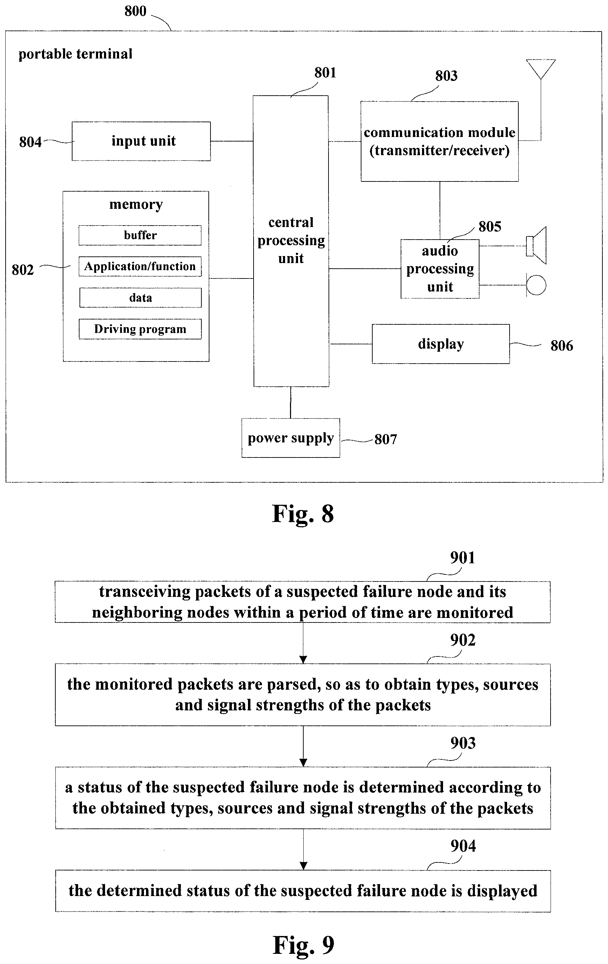

FIG. 8 is a block diagram of a hardware structure of the portable terminal of this embodiment. As shown in FIG. 8, the portable terminal 800 may include a central processing unit 801 and a memory 802, the memory 802 being coupled to the central processing unit 801. It should be noted that this figure is illustrative only, and other types of structures may also be used, so as to supplement or replace this structure and achieve a telecommunications function or other functions.

In an implementation, the functions of the diagnosis apparatus 100 described in Embodiment 1 may be integrated into the central processing unit 801. For example, the central processing unit 801 may be configured to carry out the following control: monitoring transceiving packets of a suspected failure node and its neighboring nodes within a period of time; parsing the monitored packets, so as to obtain types, sources and signal strengths of the packets; determining a status of the suspected failure node according to the obtained types, sources and signal strengths of the packets; and displaying the determined status of the suspected failure node.

In another implementation, the diagnosis apparatus 100 described in Embodiment 1 and the central processing unit 801 may be configured separately. For example, the diagnosis apparatus 100 described in Embodiment 1 may be configured as a chip connected to the central processing unit 801, with its functions being realized under control of the central processing unit 801.

As shown in FIG. 8, the portable terminal 800 may further include a communication module 803, an input unit 804, an audio processing unit 805, a display 806 and a power supply 807. It should be noted that the portable terminal 800 does not necessarily include all the parts shown in FIG. 8, and furthermore, the portable terminal 800 may include parts not shown in FIG. 8, and the relevant art may be referred to.

As shown in FIG. 8, the central processing unit 801 is sometimes referred to as a controller or control, and may include a microprocessor or other processor devices and/or logic devices. The central processing unit 801 receives input and controls operations of every components of the portable terminal 800.

In this embodiment, the memory 802 may be, for example, one or more of a buffer memory, a flash memory, a hard drive, a mobile medium, a volatile memory, a nonvolatile memory, or other suitable devices, which may store the above planned network information and deployed network information, and may further store a program executing related information. And the central processing unit 801 may execute the program stored in the memory 802, so as to realize information storage or processing, etc. Functions of other parts are similar to those of the relevant art, which shall not be described herein any further. The parts of the portable terminal 800 may be realized by specific hardware, firmware, software, or any combination thereof, without departing from the scope of the present disclosure.

With the portable terminal of this embodiment, a cause for a node failure is diagnosed and a diagnosis result is given without changing an original network and without limiting on hardware and software of a node within the network.

### Embodiment 3

The embodiment of this disclosure provides a diagnosis method for a failure node, configured in a portable terminal. As principle of the method for solving problems are similar to that of the apparatus of Embodiment 1, the implementation of the apparatus of Embodiment 1 may be referred to for implementation of the method, with identical contents being not going to be described herein any further.

FIG. 9 is a flowchart of an implementation of the diagnosis method for a failure node of this embodiment. Referring to FIG. 9, the method includes:
step 901: transceiving packets of a suspected failure node and its neighboring nodes within a period of time are monitored;
step 902: the monitored packets are parsed, so as to obtain types, sources and signal strengths of the packets;
step 903: a status of the suspected failure node is determined according to the obtained types, sources and signal strengths of the packets; and
step 904: the determined status of the suspected failure node is displayed.

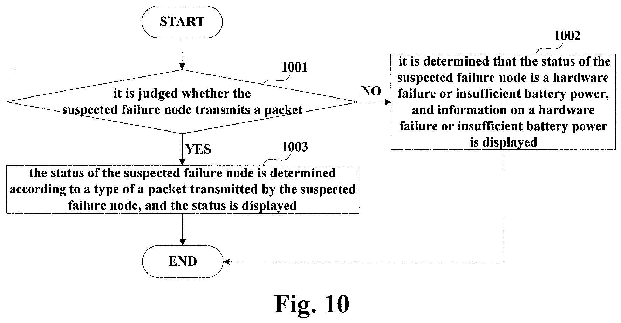

In an implementation, step 903 may be carried out by the method shown in FIG. 10. Referring to FIG. 10, the method includes:
step 1001: it is judged whether the suspected failure node transmits a packet; step 1002 is executed if it is judged no, and step 1003 is executed if it is judged yes;
step 1002: it is determined that the status of the suspected failure node is hardware failure or insufficient battery power, and information on a hardware failure or insufficient battery power is displayed; and
step 1003: the status of the suspected failure node is determined according to a type of a packet transmitted by the suspected failure node, and the status is displayed.

In this embodiment, the types of the packets include a network join-in request, data, and other information than the network join-in request and data.

In an implementation, if the type of the packet is a network join-in request, in step 1003, whether there exists an intra-network node replying to the network join-in request may be judged, when it is judged that there exists no intra-network node replying to the network join-in request, it is determined that the status of the suspected failure node is normal but there exists no network available for joining, and information on that the node is normal but there exists no network available for joining in is displayed.

In this implementation, alternatively, when it is judged that there exists an intra-network node replying to the network join-in request, whether the intra-network node replying to the network join-in request allows the suspected failure node to join in the network may further be judged, it is determined that the status of the suspected failure node is normal but there exists no network available for joining in when it is judged that the network join-in request does not allow the suspected failure node to join in the network, and information on that the node is normal but there exists no network available for joining in is displayed.

In this implementation, alternatively, whether the suspected failure node joins in the network may further be judged when it is judged that the network join-in request allows the suspected failure node to join in the network, it is determined that the status of the suspected failure node is normal when it is judged that the suspected failure node joins in the network, and information on that the node is normal is displayed.

In this implementation, alternatively, whether the suspected failure node proceeds with transmitting a network join-in request may further be judged when it is judged that the suspected failure node does not join in the network, it is determined that the status of the suspected failure node is software abnormal or insufficient receiving sensitivity or insufficient battery power when it is judged as proceeding with transmitting a network join-in request, information on being software abnormal or insufficient receiving sensitivity or insufficient battery power is displayed, and it is determined that the status of the suspected failure node is software abnormal when it is judged as not proceeding with transmitting a network join-in request, and information on being software abnormal is displayed.

In another implementation, if the type of the packet is data, in step 1003, whether a coordinator receives a data packet transmitted by the suspected failure node may be judged, it is determined that the status of the suspected failure node is link failure when it is judged that the coordinator does not receive the data packet, information on link failure is displayed, it is determined that the status of the suspected failure node is normal when it is judged that the coordinator receives the data packet, and information on that the node is normal is displayed.

In another implementation, if the type of the packet is other information than the network join-in request and data, in step 1003, it is directly determined that the status of the suspected failure node is normal, and information on that the node is normal is displayed.

FIG. 6 may be referred to for particular processing of the method of this embodiment, which shall not be described herein any further.

With the method of this embodiment, a cause for a node failure is diagnosed and a diagnosis result is given without changing an original network and without limiting on hardware and software of a node within the network.

An embodiment of the present disclosure provides a computer readable program code, which, when executed in a portable terminal, will cause a computer unit to carry out the method as described in Embodiment 3 in the portable terminal.

An embodiment of the present disclosure provides a computer readable medium, including a computer readable program code, which will cause a computer unit to carry out the method as described in Embodiment 3 in a portable terminal.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

For implementations containing the above embodiments, following supplements are further disclosed.
Supplement 1. A diagnosis apparatus for a failure node, including:
   a monitoring module configured to monitor transceiving packets of a suspected failure node and its neighboring nodes within a period of time;
   a parsing module configured to parse the packets monitored by the monitoring module, to obtain types, sources and signal strengths of the packets;
   a processing module configured to determine a status of the suspected failure node according to the types, sources and signal strengths of the packets obtained by the parsing module; and
   a displaying module configured to display the status of the suspected failure node determined by the processing module.
Supplement 2. The diagnosis apparatus according to supplement 1, wherein the diagnosis apparatus further includes:
   a storage module configured to store in a chronological order the types, sources and signal strengths of the packets obtained by the parsing module.
Supplement 3. The diagnosis apparatus according to supplement 1, wherein the processing module includes:
   a first judging module configured to judge whether the suspected failure node transmits a packet;
   a first determining module configured to determine that the status of the suspected failure node is a hardware failure or insufficient battery power when it is judged no by the first judging module; and
   a second determining module configured to determine the status of the suspected failure node according to a type of a packet transmitted by the suspected failure node when it is judged yes by the first judging module;
   and wherein, when the first determining module determines that the status of the suspected failure node is hardware failure or insufficient battery power, the displaying module displays information on the hardware failure or the insufficient battery power.
Supplement 4. The diagnosis apparatus according to supplement 3, wherein the second determining module includes:
   a third determining module configured to, when the type of the packet transmitted by the suspected failure node is a command or an acknowledgement except for a network join-in request and data, determine that the status of the suspected failure node is normal;
   and when the third determining module determines that the status of the suspected failure node is normal, the displaying module displays information on being normal.
Supplement 5. The diagnosis apparatus according to supplement 3, wherein the second determining module includes:
   a second judging module configured to, when the type of the packet transmitted by the suspected failure node is a network join-in request, judge whether there exists an intra-network node replying to the network join-in request; and
   a fourth determining module configured to determine that the status of the suspected failure node is normal but there exists no network available for joining in when it is judged no by the second judging module;
   and when the fourth determining module determines that the status of the suspected failure node is normal but there exists no network available for joining in, the displaying module displays information on that the node is normal but there exists no network available for joining in.
Supplement 6. The diagnosis apparatus according to supplement 5, wherein the second determining module further includes:
   a third judging module configured to judge whether the intra-network node replying to the network join-in request allows the suspected failure node to join in the network when it is judged yes by the second judging module; and
   a fifth determining module configured to determine that the status of the suspected failure node is normal but there exists no network available for joining in when it is judged no by the third judging module;
   and when the fifth determining module determines that the status of the suspected failure node is normal but there exists no network available for joining in, the displaying module displays information on that the node is normal but there exists no network available for joining in.
Supplement 7. The diagnosis apparatus according to supplement 6, wherein the second determining module further includes:
   a fourth judging module configured to judge whether the suspected failure node joins in a network when it is judged yes by the third judging module; and
   a sixth determining module configured to determine that the status of the suspected failure node is normal when it is judged yes by the fourth judging module;
   and when the sixth determining module determines that the status of the suspected failure node is normal, the displaying module displays information on being normal.
Supplement 8. The diagnosis apparatus according to supplement 7, wherein the second determining module further includes:
   a fifth judging module configured to judge whether the suspected failure node proceeds with transmitting a network join-in request when it is judged no by the fourth judging module;
   a seventh determining module configured to determine that the status of the suspected failure node is software abnormal or insufficient receiving sensitivity or insufficient battery power when it is judged yes by the fifth judging module; and
   an eighth determining module configured to determine that the status of the suspected failure node is software abnormal when it is judged no by the fifth judging module;
   and when the seventh determining module determines that the status of the suspected failure node is software abnormal or insufficient receiving sensitivity or insufficient battery power, the displaying module displays information on being software abnormal or insufficient receiving sensitivity or insufficient battery power, and when the eighth determining module determines that the status of the suspected failure node is software abnormal, the displaying module displays information on being software abnormal.
Supplement 9. The diagnosis apparatus according to supplement 3, wherein the second determining module includes:
   a sixth judging module configured to judge whether a coordinator receives a data packet transmitted by the suspected failure node when the type of the packet transmitted by the suspected failure node is data;
   a ninth determining module configured to determine that the status of the suspected failure node is link failure when it is judged no by the sixth judging module; and
   a tenth determining module configured to determine that the status of the suspected failure node is normal when it is judged yes by the sixth judging module;
   and when the ninth determining module determines that the status of the suspected failure node is link failure, the displaying module displays information on link failure, and when the tenth determining module determines that the status of the suspected failure node is normal, the displaying module displays information on being normal.
Supplement 10. A diagnosis method for a failure node, including:
   monitoring transceiving packets of a suspected failure node and its neighboring nodes within a period of time;
   parsing the monitored packets, to obtain types, sources and signal strengths of the packets;
   determining a status of the suspected failure node according to the obtained types, sources and signal strengths of the packets; and
   displaying the determined status of the suspected failure node.
Supplement 11. The method according to supplement 10, wherein the determining a status of the suspected failure node according to the obtained types, sources and signal strengths of the packets, includes:
   judging whether the suspected failure node transmits a packet;
   determining that the status of the suspected failure node is a hardware failure or insufficient battery power when it is judged that the suspected failure node does not transmit a packet, and displaying information on the hardware failure or the insufficient battery power; and
   determining the status of the suspected failure node according to a type of a packet transmitted by the suspected failure node when it is judged that the suspected failure node transmits a packet.
Supplement 12. The method according to supplement 11, wherein the determining the status of the suspected failure node according to a type of a packet transmitted by the suspected failure node includes:
   when the type of the packet transmitted by the suspected failure node is other information than a network join-in request and data, determining that the status of the suspected failure node is normal; and displaying information on that the node is normal.
Supplement 13. The method according to supplement 11, wherein the determining the status of the suspected failure node according to a type of a packet transmitted by the suspected failure node includes:
   when the type of the packet transmitted by the suspected failure node is a network join-in request, judging whether there exists an intra-network node replying to the network join-in request; and
   determining that the status of the suspected failure node is normal but there exists no network available for joining in when it is judged that there exists no intra-network node replying to the network join-in request, and displaying information on that the node is normal but there exists no network available for joining in.
Supplement 14. The method according to supplement 13, wherein the method further includes:
   judging whether the intra-network node replying to the network join-in request allows the suspected failure node to join in the network when it is judged that there exists an intra-network node replying to the network join-in request; and
   determining that the status of the suspected failure node is normal but there exists no network available for joining in when it is judged that the intra-network node does not allow the suspected failure node to join in the network, and displaying information on that the node is normal but there exists no network available for joining in.
Supplement 15. The method according to supplement 14, wherein the method further includes:
   judging whether the suspected failure node joins in the network when it is judged that the intra-network node allows the suspected failure node to join in the network; and
   determining that the status of the suspected failure node is normal when it is judged that the suspected failure node joins in the network, and displaying information on that the node is normal.
Supplement 16. The method according to supplement 15, wherein the method further includes:
   judging whether the suspected failure node proceeds with transmitting a network join-in request when it is judged that the suspected failure node does not join in the network;
   determining that the status of the suspected failure node is software abnormal or insufficient receiving sensitivity or insufficient battery power when it is judged as proceeding with transmitting the network join-in request, and displaying information on being software abnormal or insufficient receiving sensitivity or insufficient battery power; and
   determining that the status of the suspected failure node is software abnormal when it is judged as not proceeding with transmitting the network join-in request, and displaying information on being software abnormal.
Supplement 17. The method according to supplement 11, wherein the determining a status of the suspected failure node according to a type of a packet transmitted by the suspected failure node includes:
   judging whether a coordinator receives a data packet transmitted by the suspected failure node when the type of the packet transmitted by the suspected failure node is data;
   determining that the status of the suspected failure node is link failure when it is judged that the coordinator does not receive the data packet, and displaying information on link failure; and
   determining that the status of the suspected failure node is normal when it is judged that the coordinator receives the data packet, and displaying information on that the node is normal.
Supplement 18. A portable terminal, including the apparatus as described in any one of supplements 1-9.

## Claims

1. A diagnosis apparatus for a failure node, comprising:
a monitoring module configured to monitor transceiving packets of a suspected failure node and its neighboring nodes within a period of time;
a parsing module configured to parse the packets monitored by the monitoring module, to obtain types, sources and signal strengths of the packets;
a processing module configured to determine a status of the suspected failure node according to the types, sources and signal strengths of the packets obtained by the parsing module; and
a displaying module configured to display the status of the suspected failure node determined by the processing module.

2. The diagnosis apparatus according to claim 1, wherein the diagnosis apparatus further comprises:
a storage module configured to store in a chronological order the types, sources and signal strengths of the packets obtained by the parsing module.

3. The diagnosis apparatus according to claim 1, wherein the processing module comprises:
a first judging module configured to judge whether the suspected failure node transmits a packet;
a first determining module configured to determine that the status of the suspected failure node is a hardware failure or insufficient battery power when it is judged no by the first judging module; and
a second determining module configured to determine the status of the suspected failure node according to a type of a packet transmitted by the suspected failure node when it is judged yes by the first judging module;
and wherein, when the first determining module determines that the status of the suspected failure node is hardware failure or insufficient battery power, the displaying module displays information on the hardware failure or the insufficient battery power.

4. The diagnosis apparatus according to claim 3, wherein the second determining module comprises:
a third determining module configured to, when the type of the packet transmitted by the suspected failure node is a command or an acknowledgement except for a network join-in request and data, determine that the status of the suspected failure node is normal;
and when the third determining module determines that the status of the suspected failure node is normal, the displaying module displays information on being normal.

5. The diagnosis apparatus according to claim 3, wherein the second determining module comprises:
a second judging module configured to, when the type of the packet transmitted by the suspected failure node is a network join-in request, judge whether there exists an intra-network node replying to the network join-in request; and
a fourth determining module configured to determine that the status of the suspected failure node is normal but there exists no network available for joining in when it is judged no by the second judging module;
and when the fourth determining module determines that the status of the suspected failure node is normal but there exists no network available for joining in, the displaying module displays information on that the node is normal but there exists no network available for joining in.

6. The diagnosis apparatus according to claim 5, wherein the second determining module further comprises:
a third judging module configured to judge whether the intra-network node replying to the network join-in request allows the suspected failure node to join in the network when it is judged yes by the second judging module; and
a fifth determining module configured to determine that the status of the suspected failure node is normal but there exists no network available for joining in when it is judged no by the third judging module;
and when the fifth determining module determines that the status of the suspected failure node is normal but there exists no network available for joining in, the displaying module displays information on that the node is normal but there exists no network available for joining in.

7. The diagnosis apparatus according to claim 6, wherein the second determining module further comprises:
a fourth judging module configured to judge whether the suspected failure node joins in a network when it is judged yes by the third judging module; and
a sixth determining module configured to determine that the status of the suspected failure node is normal when it is judged yes by the fourth judging module;
and when the sixth determining module determines that the status of the suspected failure node is normal, the displaying module displays information on being normal.

8. The diagnosis apparatus according to claim 7, wherein the second determining module further comprises:
a fifth judging module configured to judge whether the suspected failure node proceeds with transmitting a network join-in request when it is judged no by the fourth judging module;
a seventh determining module configured to determine that the status of the suspected failure node is software abnormal or insufficient receiving sensitivity or insufficient battery power when it is judged yes by the fifth judging module; and
an eighth determining module configured to determine that the status of the suspected failure node is software abnormal when it is judged no by the fifth judging module;
and when the seventh determining module determines that the status of the suspected failure node is software abnormal or insufficient receiving sensitivity or insufficient battery power, the displaying module displays information on being software abnormal or insufficient receiving sensitivity or insufficient battery power, and when the eighth determining module determines that the status of the suspected failure node is software abnormal, the displaying module displays information on being software abnormal.

9. The diagnosis apparatus according to claim 3, wherein the second determining module comprises:
a sixth judging module configured to judge whether a coordinator receives a data packet transmitted by the suspected failure node when the type of the packet transmitted by the suspected failure node is data;
a ninth determining module configured to determine that the status of the suspected failure node is link failure when it is judged no by the sixth judging module; and
a tenth determining module configured to determine that the status of the suspected failure node is normal when it is judged yes by the sixth judging module;
and when the ninth determining module determines that the status of the suspected failure node is link failure, the displaying module displays information on link failure, and when the tenth determining module determines that the status of the suspected failure node is normal, the displaying module displays information on being normal.

10. A diagnosis method for a failure node, comprising:
monitoring transceiving packets of a suspected failure node and its neighboring nodes within a period of time;
parsing the monitored packets, to obtain types, sources and signal strengths of the packets;
determining a status of the suspected failure node according to the obtained types, sources and signal strengths of the packets; and
displaying the determined status of the suspected failure node.
